# EUROPÄISCHE PATENTSCHRIFT

(11) **EP 3 084 275 B1**
(45) Veröffentlichungstag und Bekanntmachung des Hinweises auf die Patenterteilung: **08.11.2017**
(21) Anmeldenummer: 14821143.6
(22) Anmeldetag: 18.12.2014
(51) Int. Cl.: F16K 11/065, F16K 27/04

(54) **VENTIL MIT EINEM VERBINDUNGSELEMENT**
VALVE WITH A CONNECTING ELEMENT
VANNE À ÉLÉMENT DE LIAISON

(30) Priorität: 19.12.2013 DE 102013226586
(43) Veröffentlichungstag der Anmeldung: 26.10.2016
(73) Patentinhaber: Robert Bosch GmbH, 70442 Stuttgart (DE)
(72) Erfinder: THIERY, Jerome, F-67100 Strasbourg (FR); HARTINGER, Markus, F-67100 Strasbourg (FR); ILLMANN, Andreas, 71263 Weil Der Stadt (DE); REEB, Georg, 77815 Buehl Eisental (DE); ENGELBERG, Ralph, 71254 Ditzingen (DE)
(86) Internationale Anmeldenummer: PCT/EP2014/078365
(87) Internationale Veröffentlichungsnummer: WO 2015/091730

(56) Entgegenhaltungen:
- WO-A1-2013/158029
- DE-A1-102009 022 639
- DE-U1-202011 051 512
- JP-A- 2009 109 006
- US-A- 3 621 878

## Beschreibung

Die Erfindung betrifft ein Ventil nach Gattung des unabhängigen Anspruchs 1.

### Stand der Technik

Es ist aus der DE 10 2009 022 639 A1 ein Flachschieberventil, das zwei Flachschieber und zwei Ventilplatten aufweist, wobei ein erster Flachschieber mit einer ersten Ventilplatte und ein zweiter Flachschieber mit einer zweiten Ventilplatte zusammenwirkt, bekannt.

Weiterhin ist bekannt, dass abhängig von der Stellung des ersten Flachschiebers ein erster Durchströmungskanal freigegeben oder versperrt wird, und abhängig von der Stellung des zweiten Flachschiebers ein zweiter Durchströmungskanal freigegeben oder versperrt wird.

### Offenbarung der Erfindung

Das erfindungsgemäße Flachschieberventil mit den Merkmalen des Hauptanspruchs hat den Vorteil, dass die Anzahl der Bauteile minimiert werden kann. Somit ist eine vereinfachte Montage und damit verbunden eine Kosteneinsparung möglich. Es ist eine sehr kompakte Bauform des Ventils möglich. Als weiteren Vorteilhaft ist anzusehen, dass bei einem erfindungsgemäßen Flachsschieberventil die Betätigungskräfte gering sind. und ein dritten Anschluss. Der erste und der zweite Anschluss sind durch den ersten Durchströmungskanal verbunden. Der Durchströmungskanal ist zwischen dem ersten und dem zweiten Anschluss angeordnet und verbindet diese. Der dritte und der zweite Anschluss sind durch den zweiten Durchströmungskanal verbunden. Der zweite Durchströmungskanal ist zwischen dem dritten und dem zweiten Anschluss angeordnet und verbindet diese. Weiter ist vorteilhaft, dass die Durchströmungskanäle, insbesondere Flüssigkeiten oder Gase von einem Anschluss zu einem weiteren und umgekehrt leiten. Die Stellung des Flachschiebers gegenüber dem zugehörigen Ventilsitz ermöglicht eine Freigabe oder Versperrung eines Durchströmungskanals, insbesondere eine Änderung der Durchströmungsmenge durch den Durchströmungskanal. Somit kann die Durchströmungsmenge, insbesondere die Durchflussmenge einfach reguliert und/ oder ein Durchströmen des Durchströmungskanals verhindert werden.

Weiter ist als vorteilhaft anzusehen, dass das Flachschieberventil mindestens eine Feder aufweist, wobei die Feder mindestens einen Flachschieber an mindestens eine Ventilplatte drückt. Durch die Verwendung einer Feder werden mögliche Toleranzen bei der Herstellung der Ventilplatte und des Flachschiebers kompensiert. Als weiteren Vorteil ist anzusehen, dass eine gewünschte Sperrung der Durchströmung, durch das Andrücken des Flachschiebers an die Ventilplatte verbessert wird. Somit erhöht die Feder die Dichtwirkung, wenn der Durchströmungskanal gesperrt, also ein Durchströmen verhindert werden soll. Auch mögliche Leckagen die einen Leckagefluss zur Folge haben, können minimiert werden.

Eine vorteilhafte Weiterbildung ist, dass mindestens eine Feder auf der Druckseite mindestens eines Flachschiebers angeordnet ist. Auf den Flachschieber wirken durch die Druckdifferenz zwischen der Druckseite und der Abströmseite Kräfte. Die Kräfte drücken vorteilhaft den Flachschieber an die Ventilplatte. Durch eine Feder auf der Druckseite werden die Kräfte durch das Medium, welche den Flachschieber an die Ventilplatte drücken, verstärkt. Vorteilhaft kann somit die Dichtwirkung des Flachschieber und der Ventilplatte verbessert werden.

In einfacher Weise wirkt das Verbindungselement durch die Ventilplatte hindurch auf den Flachschieber. Der Druck durch das zu leitende Medium auf den Flachschieber wird an die Ventilplatte weitergeleitet. Auch der Zusammenbau des Ventils kann vereinfacht werden. Weiter kann die Auslegung des Flachschiebers an die verminderte Kraft, aufgrund des Drucks angepasst werden.

Eine vorteilhafte Ausgestaltung ist, dass ein Aktor auf das Verbindungselement wirkt. Der Aktor bewegt das Verbindungselement und die mit Ihm verbunden Flachschieber. Durch Bestromung des Aktors erfolgt die Bewegung des Verbindungselements. Der Aktor selbst kann dabei insbesondere als Elektromotor oder als Spulenkörper ausgebildet sein. Das Ventil kann somit sehr einfach und kostengünstig sowie mit geringem Bauteileinsatz bewegt werden. Weiter kann auf bekannte Aktoren zurückgegriffen werden.

Eine besonders einfache Ausbildung des Verbindungselements wird dadurch erzielt, dass das Verbindungselement ein Koppelelement und ein Mitnehmerelement umfasst, wobei das Mitnehmerelement mit dem Flachschieber zusammenwirkt, insbesondere verbunden ist. Das Koppelelement und das Mitnehmerelement sind winklig, insbesondere zwischen 10 Grad und 170 Grad, vorzugsweise zwischen 60 und 120 Grad, vornehmlich 90 Grad zueinander angeordnet. Eine solche Ausbildung ermöglicht eine vorteilhafte Anordnung der einzelnen Komponenten des Flachschieberventils. Somit kann der Bauraum gesenkt werden. Weiter wird die Weitergabe der Bewegung von einem Flachschieber zu einem weiteren Flachschieber begünstigt.

Insbesondere ist vorteilhaft, dass das Verbindungselement auf der Abströmseite mindestens eines Flachschiebers angeordnet ist. Das Verbindungselement befindet sich im Auslassbereich, bzw. im Ausgang des Flachschieberventils. Somit befindet sich das Verbindungselement auf der druckabgewandten Seite des Ventilglieds, bzw. des Ventilsitzes. Eine Belastung, insbesondere durch die Kraft aufgrund des Drucks, des durch das Ventil strömende Medium auf das Verbindungselements ist minimiert. Auch kommt das Verbindungselement nur bei einem freigegeben Durchströmungskanal mit dem Medium in Kontakt. Somit wird der Einsatz von angepassten und kostengünstigen sowie einfach zu montierenden Materialien möglich.

Vorteilhaft ist, dass das Flachschieberventil ein Ventilgehäuse aufweist, wobei das Ventilgehäuse mindestens drei Ventilgehäuseteile umfassen, die jeweils ein Anschluss aufweisen. Durch die Verwendung eines Ventilgehäuses, welches aus mindestens drei Gehäuseteilen besteht, ist der Aufwand für die Herstellung der einzelnen Gehäuseteile minimiert. In einer weiteren Weiterbildung des erfindungsgemäßen Ventils sind mindestens zwei Gehäuseteile als Gleichteile ausgebildet. Dadurch kann die Herstellung, insbesondere die Montage vereinfacht und damit verbunden die Kosten gesenkt werden.

Besonders vorteilhaft ist, dass mindestens eine Dichtung zwischen mindestens zwei Ventilgehäuseteilen angeordnet ist. Insbesondere ist eine Dichtung zwischen dem ersten und dem zweiten und/oder dem zweiten und dem dritten Ventilgehäuseteil angeordnet. Die Dichtung erhöht die Dichtwirkung zwischen den Ventilgehäuseteil. Weiter verhindert die Dichtung Leckagen die Austreten des Mediums aus dem Ventilgehäuse zur Folge haben. Durch die Verwendung einer Dichtung kann die Herstellung vereinfacht werden.

Weiter ist es vorteilhaft, dass der Flachschieber beweglich zwischen zwei Ventilgehäuseteilen angeordnet ist, wobei die Ventilgehäuseteile als Führung für den Flachschieber dienen. Es werden keine weiteren Bauteile, die eine Führung der Flachschieber zur Aufgabe haben, benötigt. Dadurch lassen die Anzahl der Bauteile und der Montageschritte senken.

Ausführungsbeispiele der Erfindung sind in den Zeichnungen dargestellt und in der nachfolgenden Beschreibung näher erläutert. Es zeigen:
Figur 1 ein Flachschieberventil mit einem Durchströmungskanal,
Figur 2 ein Flachschieberventil mit zwei Durchströmungskanäle,
Figur 3 ein erstes Ausführungsbeispiel für ein erfindungsgemäßes Flachschieberventil,
Figur 4 ein weiteres Ausführungsbeispiel des erfindungsgemäßen Flachschieberventils,
Figur 5 das Flachschieberventil aus Figur 4 mit einer veränderten Stellung der Flachschieber,
Figur 6 das Flachschieberventil aus Figur 4 und Figur 5 mit einer weiteren veränderten Stellung der Flachschieber,
Figur 7 ein weiteres Ausführungsbeispiel,
Figur 8 ein Flachschieberventil mit einer gegenüber der Figur 7 geänderten Durchströmungsrichtung,
Figur 9 eine Explosionszeichnung des Flachschieberventils gemäß Figur 7 und
Figur 10 ein weiteres Ausführungsbeispiel eines Verbindungselements.

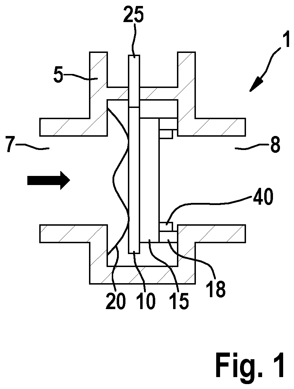

In Figur 1 ist ein Flachschieberventil 1 gezeigt. Das Flachschieberventil 1 weist ein Ventilgehäuse 5 auf. Das Ventilgehäuse 5 umfasst mindestens einen ersten Anschluss 7 und mindestens einen zweiten Anschluss 8. In dem Ventilgehäuse 5 befinden sich zwischen dem ersten Anschluss 7 und dem zweiten Anschluss 8 eine Ventilplatte 15 und ein Ventilglied 10, insbesondere ein Flachschieber 10. Der Flachschieber 10 wirkt mit einer Ventilplatte 15 zusammen. Die Ventilplatte 15 und der Flachschieber 10 weisen insbesondere Öffnungen auf. Die Ventilplatte 15 ist form- und/oder kraftschlüssig mit dem Ventilgehäuse 5 über ein Halteelement 18 verbunden. Das Ventilgehäuse 5 und das Halteelement 18 können insbesondere einteilig ausgebildet sein. Weiter kann insbesondere eine zusätzliche Dichtung 40 die Dichtwirkung verbessern. Der Flachschieber 10 ist gegenüber der Ventilplatte 15 beweglich gelagert. Der Flachschieber 10 ist somit verschiebbar gegenüber der Ventilplatte 15 angeordnet. Abhängig von der Stellung des Flachschiebers 10 gegenüber der Ventilplatte 15 wird ein Durchströmungskanal freigegeben oder gesperrt. Liegen die Öffnungen des Flachschiebers 10 und der Ventilplatte 15 übereinander so wird ein Durchströmen des Flachschieberventils 1 ermöglicht. Die Größe des Durchströmungskanals hängt von der Größe der gemeinsamen Öffnung ab, die durch die Öffnungen des Flachschiebers 10 und der Ventilplatte 15 gebildet wird. Weiter ist auch möglich das sich abhängig von der Stellung des Flachschiebers 10 gegenüber der Ventilplatte 15, eine Öffnung neben der Ventilplatte 15 oder dem Flachschieber 10 bildet, die wiederum einen Durchströmungskanal bilden kann oder ein Teil von diesem ist. Wird keine gemeinsame Öffnung gebildet, so ist ein Durchströmen nicht möglich. Das Flachschieberventil 1 ist gesperrt. Die Anzahl der Öffnungen in dem Fachschieber 10 und der Ventilplatte 15 kann beliebig sein. Eine Feder 20 drückt den Flachschieber 10 an die Ventilplatte 15 und verbessert die Dichtwirkung des Flachschieberventils 1. Der Flachschieber 10 ist mit einem Bewegungselement 25 verbunden. Das Bewegungselement 25 ermöglicht eine Verschiebung des Flachschiebers 10 durch eine Einrichtung, die sich außerhalb des Ventilgehäuses 5 befindet. Beispielhaft ist in Figur 1 der Zufluss im Bereich des ersten Anschlusses 7 angeordnet. Die Druckseite des Flachventils 1 befindet sich somit auf der Seite des ersten Anschlusses 7. Durch die Druckdifferenz wird der Flachschieber 10 auf die Ventilplatte 15 gedrückt. Die Feder 25 befindet sich auf der Druckseite des Flachschieberventils 1. Die Feder 25 verstärkt die Kraft durch die Druckdifferenz auf den Flachschieber 10. Der Pfeil in der Figur 1 entspricht der Strömungsrichtung des Flachschieberventils 1.

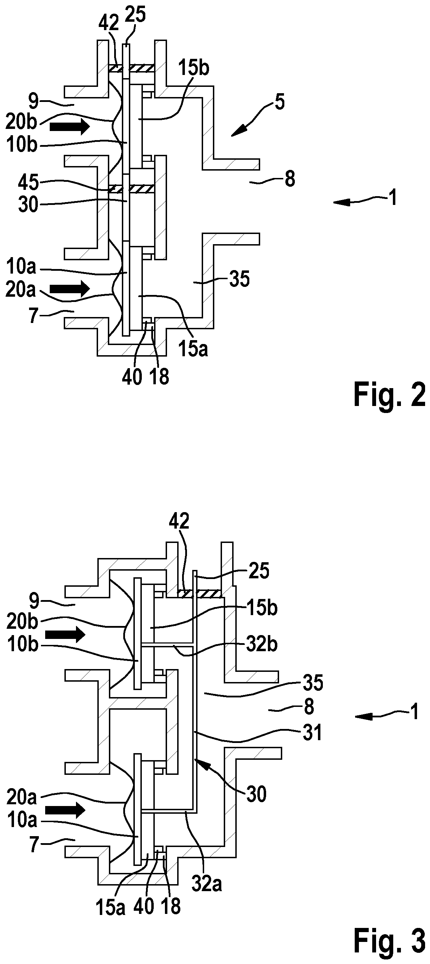

In Figur 2 ist ein Flachschieberventil 1, das als Umschaltventil ausgebildet ist, gezeigt. Das Flachschieberventil 1 weist drei Anschlüsse 7, 8 und 9 auf. Zwischen dem ersten Anschluss 7 und dem zweiten Anschluss 8 ist der erste Flachschieber 10a und die erste Ventilplatte 15a angeordnet. Zwischen dem dritten Anschluss 9 und dem zweiten Anschluss 8 ist der zweite Flachschieber 10b und die zweite Ventilplatte 15b angeordnet. Abhängig von der Stellung der Flachschieber 10a oder 10b gegenüber der jeweiligen Ventilplatten 15a oder 15b wird ein erster oder entsprechend ein zweiter Durchströmungskanal gebildet. Zwei Federn 20a oder 20b drücken den jeweils zugeordneten Flachschieber 10a oder 10b gegen die Ventilplatte 15a oder 15b. Weiter weist das Flachschieberventil 1 einen gemeinsamen Strömungsbereich 35 auf. Zwischen den Flachschiebern 10a und 10b und dem zweiten Anschluss 8 ist der gemeinsamen Strömungsbereich 35 angeordnet. Der gemeinsame Strömungsbereich 35 wird von dem Medium, welches durch den ersten Anschluss 7 und dem Medium welches durch den dritten Anschluss 9 strömt, durchströmt.

Wird das Flachschieberventil 1 als Flüssigkeitsventil verwendet, so gibt der erste Flachschieber 10a und die erste Ventilplatte 15a einen ersten Durchfluss zwischen dem ersten Anschluss 7 und dem gemeinsamen Strömungsbereich 35 frei und/oder sperren diesen. Der zweite Flachschieber 10b und die zweite Ventilplatte 15b geben eine zweiten Durchfluss zwischen dem dritten Anschluss 9 und dem gemeinsamen Strömungsbereich 35 frei und/oder sperren diesen. Das Medium des ersten Durchflusses und das Medium des zweiten Durchflusses strömen in dem gemeinsamen Strömungsbereich 35 zusammen. Der gemeinsame Strömungsbereich 35 ist mit dem zweiten Anschluss 8 verbunden, bzw. ein Teil des zweiten Anschlusses 8.

Zur Bewegung der Flachschieber 10a und 10b sind diese mit einem Verbindungselement 30 verbunden. Das Verbindungselement 30 ermöglicht eine gleichzeitiges bewegen, insbesondere verschieben des ersten Flachschiebers 10a und des zweiten Flachschiebers 10b. Das Verbindungselement 30 wiederum wirkt mit dem Bewegungselement 25 zusammen. Eine Dichtung 42 verhindert ein Austritt eines der durchströmenden Medien aus dem Flachschieberventil 1 über das Bewegungselement 25. Um eine Vermischung der Medien zwischen dem ersten Anschluss 7 und dem dritten Anschluss 9 zu verhindern, müssen die Anschlüsse 7, 9 gegeneinander abgedichtet werden. Hierzu verläuft das Verbindungselement 30 durch eine Zwischendichtung 45. Es wird somit eine aufwendige und kostenintensive Lösung für eine Abdichtung des ersten Anschlusses 7 gegenüber dem dritten Anschluss 9 und umgekehrt, benötigt. Weiter erhöht die Zwischendichtung 45 die Betätigungskräfte des Flachschieberventils 1. Auch werden mit der Zwischendichtung 45 weitere Bauteile benötigt.

Figur 3 zeigt ein erstes Ausführungsbeispiel für ein erfindungsgemäßes Flachschieberventil 1. Das Flachschieberventil 1 weist ein Ventilgehäuse 5 auf. In dem Ventilgehäuse 5 sind ein erster und ein zweiter Flachschieber 10a und 10b, eine erste Ventilplatte 15a und eine zweite Ventilplatte 15b sowie eine erste und eine zweite Feder 20a und 20b angeordnet. Der erste Flachschieber 10a wirkt mit der ersten Ventilplatte 15a und der ersten Feder 20a zusammen. Der zweite Flachschieber 10b wirkt mit der zweiten Ventilplatte 15b und der zweiten Feder 20b zusammen. Der erste Ventilschieber 10a und die erste Ventilplatte 15a geben einen Durchströmungskanal von Anschluss 7 zu dem gemeinsamen Strömungsbereich 35 und umgekehrt frei oder sperren diesen. Der zweite Ventilschieber 10b und die zweite Ventilplatte 15b geben einen Durchströmungskanal von Anschluss 9 zu dem gemeinsamen Strömungsbereich 35 und umgekehrt frei oder sperren diesen. Die Federn 20a und 20b sind auf der Druckseite angeordnet. Vorzugsweise ist die Druckseite der Flachschieber 10a und 10b den Anschlüssen 7 und 9 zugeordnet. Wohingegen die Abströmseite des jeweiligen Flachschiebers 10a oder 10b dem gemeinsamen Strömungsbereich 35 zugeordnet ist. Das Medium strömt über Anschluss 7 oder 9 in das Ventil 1 und über den gemeinsamen Flussbereich 35 und den Anschluss 8 aus dem Ventil 1 hinaus.

Das Verbindungselement 30 verbindet den ersten Flachschieber 10a mit dem zweiten Flachschieber 10b. Das Verbindungselement 30 ist mit dem Bewegungselement 25 verbunden. Das Verbindungselement 30 und das Bewegungselement 25 können insbesondere einteilig ausgebildet sein. Eine Dichtung 42 verhindert ein Ausritt eines der durchströmenden Medien aus dem Flachschieberventil 1 über das Bewegungselement 25. Das Verbindungselement 30 befindet sich in dem gemeinsamen Flussbereich 35. Dabei befindet sich das Verbindungselement 30 im Wesentlichen vollständig in dem gemeinsamen Flussbereich 35 des Flachschieberventils 1. Das Verbindungselement 30 ist mit dem ersten Flachschieber 10a und dem zweiten Flachschieber 10b, sowie allen weiteren Flachschiebern 10 verbunden. Das Verbindungselement 30 verläuft durch die Ventilplatte 15 zu dem Flachschieber 10, insbesondere verläuft das Verbindungselement 30 durch die Ventilplatte 15a zu dem Flachschieber 10a und durch die Ventilplatte 15b zu dem Flachschieber 10b.

Das Verbindungselement 30 umfasst ein Koppelelement 31 und ein Mitnehmerelement 32. Das Koppelelement 31 ist mit mindestens einem Mitnehmerelement 32 verbunden. In Figur 3 umfasst das Verbindungselement 30 ein erstes Mitnehmerelement 32a, ein zweites Mitnehmerelement 32b sowie ein Koppelelement 31. Das erste Mitnehmerelement 32a verläuft durch die erste Ventilplatte 15a hindurch zu dem Flachschieber 10a. Das erste Mitnehmerelement 32a ist mit dem ersten Flachschieber 10a verbunden. Das zweite Mitnehmerelement 32b verläuft durch die zweite Ventilplatte 15b hindurch zu dem zweiten Flachschieber 10b. Das zweite Mitnehmerelement 32b ist mit dem zweiten Flachschieber 10b verbunden. Die Mitnehmerelemente 32a und 32b sind winklig zu dem Koppelelement 31 angeordnet. Insbesondere sind die Mitnehmerelemente 32a und 32b in einem Winkel größer 10 Grad, vorzugsweise im Bereich von 90 Grad, also senkrecht zueinander angeordnet. Die Mitnehmerelemente 32a und 32b und das Koppelelement 31 können einteilig ausgebildet sein. Auch die Flachschieber 10a, 10b und die Mitnehmerelemente 32a, 32b können einteilige ausgebildet sein.

Die Bewegungskräfte des Verbindungselements 30 sind aufgrund der fehlenden Zwischendichtung 45, gegenüber den Bewegungskräften gemäß dem Aufbau aus Figur 2 gesenkt. Weiter werden weniger Bauteile benötigt.

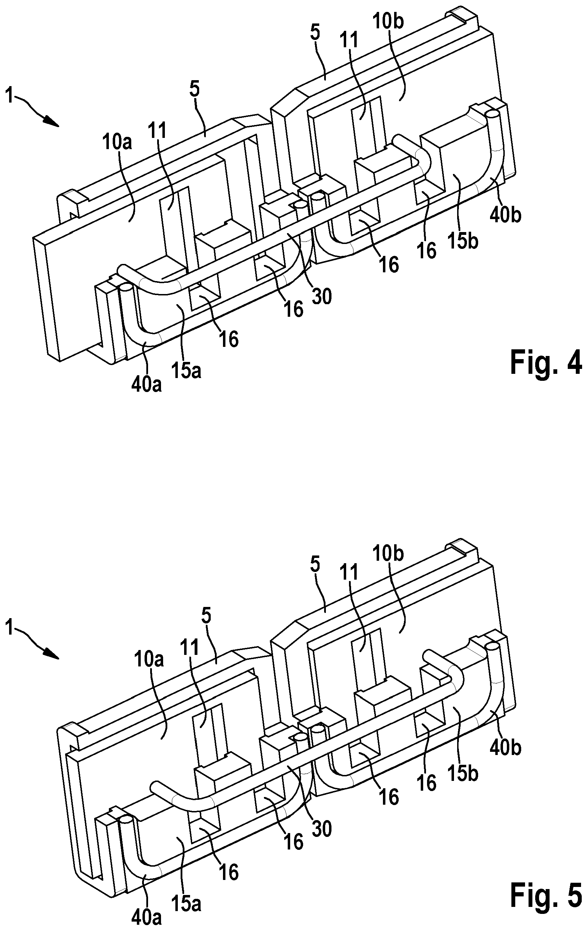

Figur 4 zeigt ein weiteres Ausführungsbeispiel des erfindungsgemäßen Flachschieberventils 1. In Figur 4 ist ein Teil des Ventilgehäuses 5 als Rahmen, welcher die Flachschieber 10 führen, gezeigt. Das weitere Gehäuse 5 sowie die Anschlüsse 7, 8 und 9 wurden aufgrund einer besseren Darstellbarkeit in der Figur 4 nicht eingezeichnet. Zwischen dem Ventilgehäuse 5 und dem Flachschieber 10 befindet sich mindestens eine Feder 20. Weiter ist ein erster Flachschieber 10a und eine erste Ventilplatte 15a gezeigt. Der erster Flachschieber 10a und die erste Ventilplatte 15a wirken zusammen. Die Flachschieber 10a weist Öffnungen 11 auf und die Ventilplatte 15a weist Öffnungen 16 auf. Gemäß der Figur 4 liegen die Öffnungen 11 und die Öffnungen 16 übereinander und ermöglichen somit einen Durchfluss eines Mediums durch das Flachschieberventil 1. Die übereinanderliegenden Öffnungen 11 und 16 bilden einen Durchströmungskanal, insbesondere einen Teil des Durchströmungskanals. Der Durchströmungskanal umfasst die Öffnungen eines Flachschiebers 10 oder einer Ventilplatte 15. Auch wird der Durchströmungskanal durch eine Öffnung, die sich aufgrund fehlender Überdeckung des Ventilplatte 15 und des Flachschiebers 10 ergeben, gebildet.

Das Medium kann insbesondere flüssig oder gasförmig sein. Auch der zweite Flachschieber 10b weist Öffnungen 11 auf. Diese liegen jedoch gemäß Figur 4 versetzt zu den Öffnungen 16 der Ventilplatte 15b. Somit ist kein Durchfluss eines Mediums durch das Flachschieberventil 1 möglich. Der Durchfluss ist gesperrt, bzw. verschlossen. Der Durchströmungskanal ist somit versperrt.

Der erste und der zweite Flachschieber 10a und 10b sind über ein Verbindungselement 30 miteinander form- und kraftschlüssig verbunden. Wird einer der beiden Flachschieber 10 bewegt, so wird über das Verbindungselement 30 der zweite Flachschieber 10 mit bewegt, insbesondere verschoben. Die Bewegung, bzw. die Verschiebung der Flachschieber 10 kann über das Bewegungselement 25 erfolgen oder direkt über das Verbindungselement 30. Eine zusätzliche Dichtung 40a und 40b ermöglicht verbesserte Abdichtung der Ventilplatte 15 gegenüber dem Ventilgehäuse 5.

Zwischen dem Ventilgehäuse 5 und dem Flachschieber 10 kann insbesondere eine Feder 20 angeordnet sein. Die Feder 20 drückt den Flachschieber 10 gegen die Ventilplatte 15.

Der erste Flachschieber 10a sperrt oder gibt den ersten Durchströmungskanal frei. Der erste Durchströmungskanal befindet sich zwischen dem ersten Anschluss (in Figur 4 zur leichteren Übersicht nicht dargestellt) und dem gemeinsamen Strömungsbereich (in Figur 4 zur leichteren Übersicht nicht dargestellt). Der zweite Flachschieber 10b sperrt oder gibt den zweiten Durchströmungskanal frei. Der zweite Durchströmungskanal verbindet den dritten Anschluss (in Figur 4 zur leichteren Übersicht nicht dargestellt) mit dem gemeinsamen Strömungsbereich (in Figur 4 zur leichteren Übersicht nicht dargestellt). Das Verbindungselement 30 ist im gemeinsamen Strömungsbereich angeordnet.

Das Flachschieberventil 1 aus Figur 5 entspricht dem Flachschieberventils 1 aus Figur 4 mit einer veränderten Stellung der Flachschieber 10a und 10b gegenüber den Ventilplatten 15a und 15b. Die Öffnungen 11 der Flachschieber 10a und 10b sind verdeckt durch die Ventilplatte 15a und 15b. Die Öffnungen 16 der Ventilplatte 15a und 15b sind verdeckt durch die Flachschieber 10a und 10b. Das Durchströmen des Flachschieberventils 1 ist somit nicht möglich. Der Durchströmungskanal ist gesperrt. Es gibt keinen Kanal der ein Durchströmen des Flachschieberventils 1 ermöglicht.

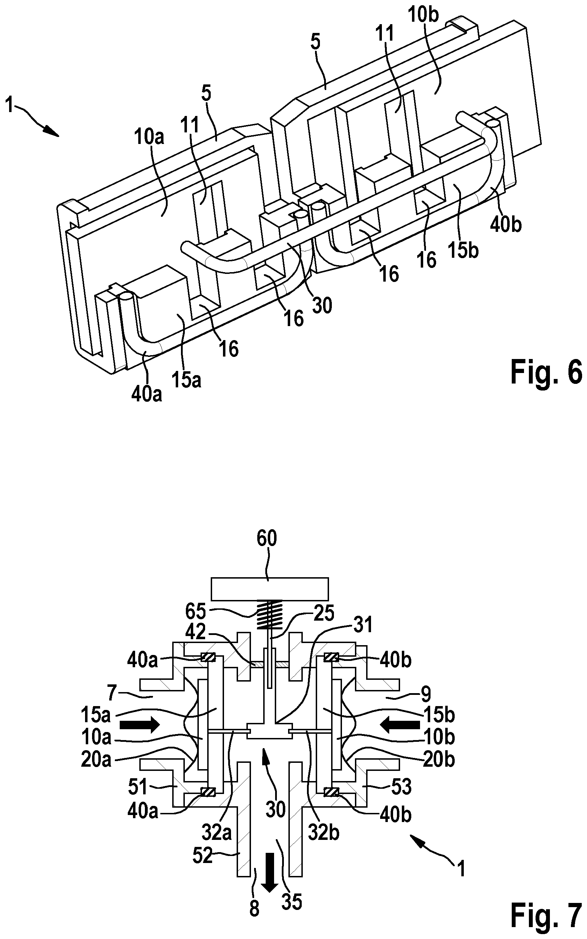

Figur 6 zeigt das Flachschieberventil 1 aus Figur 4 und Figur 5 mit einer weiteren veränderten Stellung der Flachschieber 10a und 10b gegenüber der Ventilplatten 15a und 15b. Die Bezugszeichen von Figur 4, 5 und 6 sind identisch. In Figur 6 bilden die Öffnungen 11 des zweiten Flachschiebers 10b zusammen mit den Öffnungen der zweiten Ventilplatte 15b einen Durchströmungskanal durch das Ventil 1. Beispielsweise ist jeder Flachschieber 10a und 10b einem separaten Anschluss zugeordnet und das Verbindungselement 30 befindet sich in einem gemeinsamen Strömungsbereich 35. Beispielsweise ist der erste Flachschieber 10a dem ersten Anschluss und der zweite Flachschieber 10b dem zweiten Anschluss zugeordnet. Gemäß der Stellung der Flachschieber 10a und 10b aus Figur 4 ist ein Durchströmen eines Mediums zwischen dem gemeinsamen Strömungsbereich und dem ersten Anschluss und umgekehrt möglich. Gemäß der Stellung der Flachschieber 10a und 10b aus Figur 5 ist kein Durchströmen eines Mediums zwischen dem gemeinsamen Strömungsbereich und dem ersten Anschluss oder dem dritten Anschluss möglich. Gemäß der Stellung der Flachschieber 10a und 10b aus Figur 6 ist ein Durchströmen eines Mediums zwischen dem gemeinsamen Strömungsbereich und dem zweiten Anschluss und umgekehrt möglich.

In Figur 7 ist ein weiteres Ausführungsbeispiel eines erfindungsgemäßen Flachschieberventils 1 gezeigt. Das Flachschieberventil 1 weist ein Ventilgehäuse 5 auf. Das Ventilgehäuse 5 weist wiederum mehrere Ventilgehäuseteile 51, 52 und 53 auf. Das erste Ventilgehäuseteil 51 umfasst einen ersten Anschluss 7. Das zweite Ventilgehäuseteil 52 umfasst einen gemeinsamen Strömungs- und/oder Flussbereich 35 und einen zweiten Anschluss 8. Der gemeinsame Strömungsbereich 35 ist mit dem zweiten Anschluss 8 verbunden. Das erste und das zweite Ventilgehäuseteil 51 und 52 wird insbesondere zusammengesetzt, geklebt, geschweißt oder geklippst. Zwischen dem ersten Gehäuseteil 51 und dem zweiten Gehäuseteil 52 ist die Ventilplatte 15a, der Flachschieber 10a, die Feder 20a und die Dichtung 40a angeordnet. Die Ventilplatte 15a liegt an dem zweiten Gehäuseteil 52 an. Zwischen dem zweiten Gehäuseteil 52, dem ersten Gehäuseteil 51 und der Ventilplatte 15a ist die Dichtung 40a angeordnet. Die Dichtung 40a verhindert mögliche Leckagen zwischen dem ersten Anschluss 7 und der Umgebung oder dem ersten Anschluss 7 und dem gemeinsamen Durchströmungsbereich 35. An die Ventilplatte 15a wird der Flachschieber 10a mittels der Feder 20a gedrückt, insbesondere gepresst. In dem Flachschieber 10a und der Ventilplatte 15a sind jeweils Öffnungen angebracht die abhängig von der Stellung zueinander einen Durchströmen ermöglichen oder versperren.

Zur Vereinfachung der Herstellung kann das dritte Ventilgehäuseteil 53 gleich wie das erste Ventilgehäuseteil 51 ausgebildet sein, insbesondere die Funktionsweise der beiden Ventilgehäuseteile ist gleich. Das dritte Ventilgehäuseteil 53 umfasst einen dritten Anschluss 9. Das dritte und das zweite Gehäuseteil 53 und 52 werden insbesondere zusammengesetzt, geklebt, geschweißt oder geklippst. Zwischen dem dritten Gehäuseteil 53 und dem zweiten Gehäuseteil 52 ist die Ventilplatte 15b, der Flachschieber 10b, die Feder 20b und die Dichtung 40a angeordnet. Die Ventilplatte 15b liegt an dem zweiten Gehäuseteil 52 an. Zwischen dem zweiten Gehäuseteil 52, dem dritten Gehäuseteil 51 und der Ventilplatte 15b ist die Dichtung 40b angeordnet. Die Dichtung 40b verhindert mögliche Leckagen zwischen dem dritten Anschluss 9 und der Umgebung oder dem dritten Anschluss 9 und dem gemeinsamen Durchströmungsbereich 35. An die Ventilplatte 15b wird der Flachschieber 10b mittels der Feder 20b gedrückt, insbesondere gepresst. In dem Flachschieber 10b und der Ventilplatte 15b sind jeweils Öffnungen angebracht die abhängig von der Stellung zueinander einen Durchströmen ermöglichen oder versperren.

Die Funktionsweise des Flachschiebers 10b, der Ventilplatte 15b, der Feder 20b und der Dichtung 40b des dritten Ventilgehäuses 53 ist daher mit dem Flachschieber 10a, der Ventilplatte 15a, der Feder 20a und der Dichtung 40a des ersten Ventilgehäuseteils 51 identisch.

Weiter sind die Flachschieber 10a und 10b beweglich insbesondere verschiebbar gelagert. Durch die die Verschiebbarkeit ist es möglich die Öffnungen des Flachschiebers 10 über die Öffnungen der Ventilplatte zu bewegen und ein Durchströmen zu ermöglichen. Es können jedoch auch die Öffnungen der Ventilplatte 15 durch die Öffnungen des Flachschiebers 10 und umgekehrt verdeckt werden. In diesem Fall ist das Durchströmen eines Mediums durch den Ventilplatten-15 und Flachschieberbereich 10 verhindert, bzw. versperrt. Weiter kann ein Durchströmungskanal freigegeben werden, aufgrund einer fehlenden Überdeckung der Ventilplatte 15 und des Flachschiebers 10. Der Durchströmungskanal kann sich insbesondere aus beliebig vielen Kanälen, bzw. Öffnungen die beim Zusammenwirken eines Flachschiebers 10 mit einer Ventilplatte 15 entstehen, zusammensetzen.

Die Flachschieber 10a und 10b sind mit dem Verbindungselement 30 verbunden. Das Verbindungselement 30 umfasst ein Koppelungselement 31 und mindestens ein Mitnehmerelement 32. Das Mitnehmerelement 32 verbindet den Flachschieber 10 mit dem Koppelungselement 31. Das Mitnehmerelement 32 verläuft dabei durch die Ventilplatte 15 hindurch. In Figur 7 ist ein erstes Mitnehmerelement 32a mit dem ersten Flachschieber 10a verbunden. Ein zweites Mitnehmerelement 32b ist mit dem zweiten Flachschieber 10b verbunden. Die Mitnehmerelement 32a und 32b sind in der gleichen Achse angeordnet. Die Mitnehmerelemente 32a und 32b sind winklig, insbesondere wie in der Figur gezeigt, rechtwinklig mit dem Koppelelement 31 verbunden. Die Mitnehmerelemente 32a und 32b können einteilig ausgeführt sein.

Das Verbindungselement 30 befindet sich im Wesentlichen, insbesondere vollständig in einem durchströmten Bereich des Ventils 1. Das Verbindungselement 30 befindet sich im gemeinsam durchströmten Bereich 35 des Ventils 1. Das Verbindungselement 30 wird somit von dem Medium, welches durch den ersten Anschluss 7 strömt, als auch von dem Medium, welches durch den zweiten Anschluss 8 und welches durch den dritten Anschluss 9 strömt, umflossen. Das Verbindungselement 30 ist mit einem Bewegungselement 25 verbunden. Das Bewegungselement 25 wird von einem Aktor 60 bewegt. Das Verbindungselement 30 und das Bewegungselement 25 können insbesondere einteilig ausgebildet sein.

Der Aktor 60 kann als Elektromotor oder als Elektromagnet ausgebildet sein. Durch die Bestromung des Aktors 60, beispielsweise eines Elektromagneten wird ein Anziehungselement angezogen. Das Anziehungselement ist mit dem Bewegungselement 25 verbunden. Das Anziehungselement und das Bewegungselement 25 sind insbesondere einteilige ausgeführt. Somit werden bei Bestromung des Aktors 60 das Verbindungselement 30 und damit die Flachschieber 10a und 10b verschoben. Eine Rückstellfeder 65 bewegt das Verbindungselement 30 und die damit verbunden Flachschieber 10a und 10b eine Ausgangsstellung zurück.

Ist der Aktor 60 als Elektromotor ausgebildet beginnt dieser sich bei Bestromung zu drehen. Durch eine Spindel wird die Rotation des Elektromotors in eine Längsbewegung umgesetzt. Die Längsbewegung kann wiederum über das Bewegungselement 25 an das Verbindungselement 30 weitergeleitet werden.

Gemäß einem weiteren Ausführungsbeispiel kann der Aktor 60 als Elektromotor ausgebildet sein. Das Verbindungselement 30 wirkt als Spindel in deren Gewinde die Mitnehmerelement 32a und 32b eingreifen. Durch eine Rotation des Elektromotors werden die Mitnehmerelemente 32a und 32b verschoben, insbesondere in Längsrichtung verschoben.

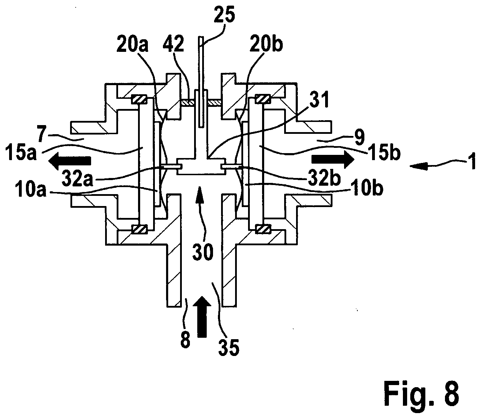

In Figur 8 sind die Strömungsrichtungen des Mediums durch das Ventil gegenüber den Strömungsrichtungen aus Figur 7 verändert. In dem Flachschieberventil 1 in Figur 7 entsprechen die Einlasse den Anschlüssen 7 und 9 und der Auslass entspricht dem Anschluss 8. In Figur 8 entspricht der Einlass dem Anschluss 8 und die Auslasse den Anschlüssen 7 und 9. Bei dem Ventil 1 gemäß Figur 8 sind die Anordnung der Flachschieber 10, der Ventilplatte 15 und der Feder 20 verändert. In Figur 7 befinden sich die Federn 20a und 20b im Einlassbereich, bzw. im Druckbereich also im Bereich der Anschlüsse 7 und 9 des Flachschieberventils 1. Da sich in Figur 8 der Einlassbereich im gemeinsam durchströmten Bereich 35 befindet sind die Federn 20a und 20b diesem Bereich zugeordnet. Die Federn 20 drücken den Flachschieber 10 gegen die Ventilplatte 15. Unterstützt werden die Federn 20 durch die Kraft aufgrund des Drucks Mediums in dem Einlasskanal. Das Verbindungselement 30 befindet sich in dem gemeinsam durchströmten Bereich 35. Die Funktionsweise und der Aufbau des Verbindungselements 30 ist identisch mit der Funktionsweise des Verbindungselements in Figur 7.

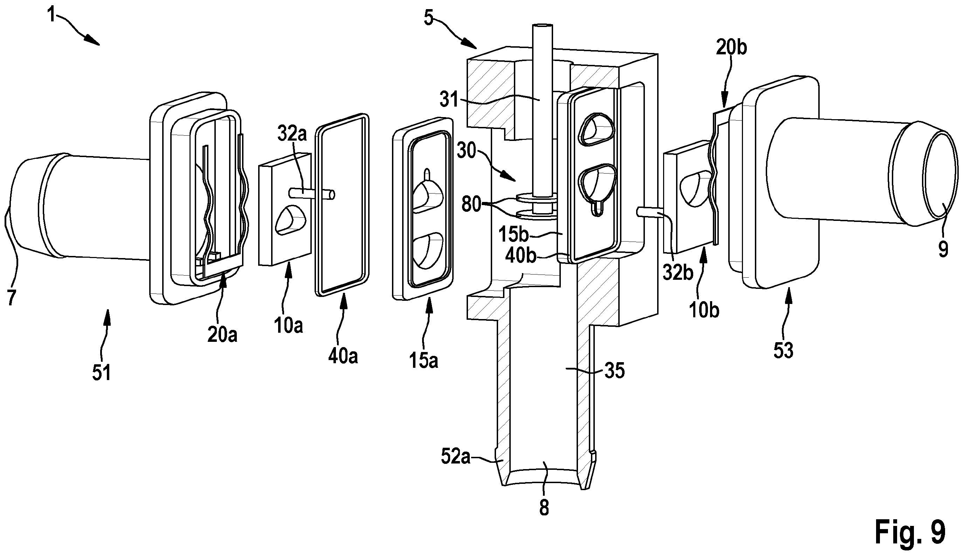

In Figur 9 ist eine Explosionsansicht des erfindungsgemäßen Flachschieberventils 1 gemäß der Figur 7 gezeigt. Das Ventilgehäuse 5 umfasst ein erstes Gehäuseteil 51, ein zweites Gehäuseteil 52 und ein drittes Gehäuseteil 53. Weiter ist im Bereich des ersten Gehäuseteils 51 und dem zweiten Gehäuseteil 52 die Feder 20a, der Flachschieber 10a, die Dichtung 40a und die Ventilplatte 15a angeordnet. Zwischen dem zweiten Gehäuseteil 52 und dem dritten Gehäuseteil 53 ist die Feder 20b, der Flachschieber 10b, die Dichtung 40b und die Ventilplatte 15b angeordnet. Die Funktionsweise und der Aufbau entspricht dem aus Figur 7. Das Verbindungselement 30 umfasst ein Koppelungselement 31. Das Koppelungselement 31 weist an einem Endbereich zwei 80 auf. Das Koppelungselement 31 und die Falze 80 sind insbesondere einteilig ausgebildet. Die beiden Falze 80 dienen zur Führung der Mitnehmerelemente 32a und 32b. Über die beiden Falze 80 ist das Koppelungselement 31 mit mindestens einem der Mitnehmerelementen 32a und/oder 32b formschlüssig verbunden. Somit ist eine Bewegung der Flachschieber 10a und 10b über das Verbindungselement 30 möglich. Die Flachschieber 10 können einteilig mit den Mitnehmern 32 ausgebildet sein.

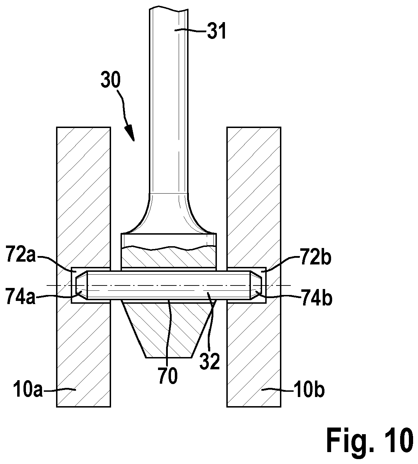

In Figur 10 ist ein weiteres Ausführungsbeispiel eines Verbindungselements 30 für ein erfindungsgemäßes Flachschieberventil 1 gezeigt. Das Verbindungselement 30 kann in einem erfindungsgemäßen Flachschieberventil 1 verwendet werden. Das Verbindungselement 30 weist ein Mitnehmerelement 32 und ein Koppelelement 31 auf. Das Koppelelement 31 weist einen Befestigungskanal 70 auf. Das Mitnehmerelement 32 ist insbesondere als Stift ausgebildet. Das Mitnehmerelement 32 weist zwei Enden 74a, 74b auf. In den Befestigungskanal 70 ist das Mitnehmerelement 32 insbesondere winkelsteif und zentriert eingepasst. Das Mitnehmerelement 32 gemäß Figur 10 wirkt mit dem ersten Flachschieber 10a und dem zweiten Flachschieber 10b zusammen. Die Flachschieber 10a und 10b weisen hierzu jeweils ein Aufnahmeelement 72a, 72b, insbesondere eine Bohrung ,eine Vertiefung oder eine Nut auf. In das Aufnahmeelement 72a greift ein Ende 74a des Mitnehmerelements 32 ein und in das Aufnahmeelement 72b greift ein weitere Ende 74b des Mitnehmerelements 32 ein. Das Mitnehmerelement 32 und die Flachschieber 10a, 10b wirken,insbesondere über eine lose Passung oder einen Formschluss miteinander zusammen, bzw. sind miteinander verbunden. Das Koppelelement 31 gibt die Bewegung des Aktors 60 über das Mitnehmerelement 32 an den ersten Flachschieber 10a und den zweiten Flachschieber 10b weiter. Der Aktor 60 wirkt über das Koppelelement 31 und das Mitnehmerelement 32 auf die Flachschieber 10a und 10b.

Der Aufbau gemäß Figur 10 kann insbesondere in einem Flachschieberventil 1 gemäß den Figuren 7 bis 9 eingesetzt werden. Zur einfacheren Übersicht wurden weitere Bauteile, insbesondere das Gehäuse 5, die Anschlüsse 7, 8 und 9 usw., gemäß der Figuren 7 bis 9 in der Figur 10 nicht dargestellt.

Gemäß einem weiteren Ausführungsbeispiel wirkt der Aktor 60 direkt auf einen Flachschieber 10a, 10b. Der Flachschieber 10a, 10b weist hierzu das Anziehungselement auf, bzw. umfasst das Anziehungselement. Insbesondere kann der Flachschieber 10a, 10b zumindest teilweise Material umfassen, das durch die magnetische Kraft des Aktor 60 angezogen, bzw. abgestoßen werden kann. Weiter kann die Kraft über Spindeln, Zahnräder usw. vom Aktor 60 auf einen der Flachschieber 10 übertragen werden. Somit wirkt die Kraft des Aktors 60 direkt auf den Flachschieber 10a und/oder 10b. Das Verbindungselement 30 gibt die Bewegung des ersten Flachschiebers 10a an den zweiten Flachschieber 10b und/oder umgekehrt weiter. Durch die direkte Krafteinwirkung auf eines oder beide Flachschieber 10a, 10b durch den Aktor 60 wird eine gleichmäßige Kraftverteilung ohne Hebelarm begünstigt.

Das Flachschieberventil 1 kann um beliebig viele Flachschieber 10, Ventilplatten 15, Anschlüsse und/oder Federn 20 erweitert werden.

## Patentansprüche

1. Flachschieberventil (1), insbesondere Flüssigkeitsventil, das mindestens zwei Flachschieber (10a, 10b) und mindestens zwei Ventilplatten (15a, 15b) aufweist, wobei ein erster Flachschieber (10a) mit einer ersten Ventilplatte (15a) und ein zweiter Flachschieber (10b) mit einer zweiten Ventilplatte (15b) zusammenwirkt, wobei abhängig von der Stellung des ersten Flachschiebers (10a) ein erster Durchströmungskanal freigegeben oder versperrt wird, und/oder abhängig von der Stellung des zweiten Flachschiebers (10b) ein zweiter Durchströmungskanal freigegeben oder versperrt wird, und wobei die Flachschieber (10a, 10b) über ein Verbindungselement (30) miteinander verbunden sind, **dadurch gekennzeichnet, dass** das Verbindungselement (30) im Wesentlichen in einem gemeinsamen Strömungsbereich (35) der Flachschieber (10a, 10b) des Flachschieberventils (1) angeordnet ist.

2. Flachschieberventil (1) gemäß dem vorhergehenden Anspruch, **dadurch gekennzeichnet, dass** das Flachschieberventil (1) mindestens drei Anschlüsse (7, 8, 9) aufweist, wobei der erste Durchströmungskanal einen ersten Anschluss (7) und einen zweiten Anschluss (8) verbindet und der zweite Durchströmungskanal einen zweiten Anschluss (8) und einen dritten Anschluss (9) verbindet.

3. Flachschieberventil (1) gemäß einem der vorhergehenden Ansprüche, **dadurch gekennzeichnet, dass** das Flachschieberventil (1) mindestens eine Feder (20) aufweist, wobei die Feder (20) mindestens einen Flachschieber (10a, 10b) an mindestens eine Ventilplatte (15a, 15b) drückt.

4. Flachschieberventil (1) gemäß dem Anspruch 2 bis 3, **dadurch gekennzeichnet, dass** mindestens eine Feder (20) auf der Druckseite mindestens eines Flachschiebers (1) angeordnet ist.

5. Flachschieberventil (1) gemäß einem der vorhergehenden Ansprüche, **dadurch gekennzeichnet, dass** das Verbindungselement (30) durch die Ventilplatte (15a, 15b) hindurch auf den Flachschieber (10a, 10b) wirkt.

6. Flachschieberventil (1) gemäß einem der vorhergehenden Ansprüche, **dadurch gekennzeichnet, dass** ein Aktor (60), insbesondere ein Spulenkörper oder ein Elektromotor auf das Verbindungselement (30) wirkt, insbesondere dieses bewegt, vorzugsweise verschiebt.

7. Flachschieberventil (1) gemäß einem der vorhergehenden Ansprüche, **dadurch gekennzeichnet, dass** das Verbindungselement (30) ein Koppelelement (31) und ein Mitnehmerelement (32) umfasst, wobei das Mitnehmerelement (32) mit mindestens einem Flachschieber (10a, 10b) zusammenwirkt, insbesondere verbunden ist, und das Koppelelement (31) und das Mitnehmerelement (32) im Wesentlichen winklig zueinander angeordnet sind.

8. Flachschieberventil (1) gemäß einem der vorhergehenden Ansprüche, **dadurch gekennzeichnet, dass** das Verbindungselement (30) auf der Abströmseite mindestens eines Flachschiebers (10a, 10b) angeordnet ist.

9. Flachschieberventil (1) gemäß einem der vorhergehenden Ansprüche, **dadurch gekennzeichnet, dass** das Flachschieberventil (1) ein Ventilgehäuse (5) aufweist, wobei das Ventilgehäuse (5) mindestens drei Ventilgehäuseteile (51, 52, 53) umfassen, die jeweils einen Anschluss (7, 8, 9) aufweisen.

10. Flachschieberventil (1) gemäß dem vorhergehenden Anspruch, **dadurch gekennzeichnet, dass** mindestens eine Dichtung (40) zwischen mindestens zwei Ventilgehäuseteilen (51, 52, 53) angeordnet ist.

11. Flachschieberventil (1) gemäß einem der Ansprüche 9 bis 10, **dadurch gekennzeichnet, dass** der Flachschieber (10a, 10b) beweglich zwischen zwei Ventilgehäuseteilen (51, 52, 53) angeordnet ist.

## Claims

1. Flat slide valve (1), in particular liquid valve, which has at least two flat slides (10a, 10b) and at least two valve plates (15a, 15b), wherein a first flat slide (10a) interacts with a first valve plate (15a) and a second flat slide (10b) interacts with a second valve plate (15b), wherein a first flow channel is opened or blocked depending on the position of the first flat slide (10a), and/or a second flow channel is opened or blocked depending on the position of the second flat slide (10b), and wherein the flat slides (10a, 10b) are connected to each other via a connecting element (30), **characterized in that** the connecting element (30) is arranged substantially in a common flow region (35) of the flat sides (10a, 10b) of the flat slide valve (1).

2. Flat slide valve (1) according to the preceding claim, **characterized in that** the flat slide valve (1) has at least three ports (7, 8, 9), wherein the first flow channel connects a first port (7) and a second port (8), and the second flow channel connects a second port (8) and a third port (9).

3. Flat slide valve (1) according to one of the preceding claims, **characterized in that** the flat slide valve (1) has at least one spring (20), wherein the spring (20) presses at least one flat slide (10a, 10b) against at least one valve plate (15a, 15b).

4. Flat slide valve (1) according to Claim 2 to 3, **characterized in that** at least one spring (20) is arranged on the pressure side of at least one flat slide (1).

5. Flat slide valve (1) according to one of the preceding claims, **characterized in that** the connecting element (30) acts on the flat slide (10a, 10b) via the valve plate (15a, 15b).

6. Flat slide valve (1) according to one of the preceding claims, **characterized in that** an actuator (60), in particular a coil former or an electric motor, acts on the connecting element (30), in particular moving, preferably sliding, the latter.

7. Flat slide valve (1) according to one of the preceding claims, **characterized in that** the connecting element (30) comprises a coupling element (31) and a driver element (32), wherein the driver element (32) interacts with, in particular is connected to, at least one flat slide (10a, 10b) and the coupling element (31) and the driver element (32) are arranged substantially at an angle to one another.

8. Flat slide valve (1) according to one of the preceding claims, **characterized in that** the connecting element (30) is arranged on the outflow side of at least one flat slide (10a, 10b).

9. Flat slide valve (1) according to one of the preceding claims, **characterized in that** the flat slide valve (1) has a valve housing (5), wherein the valve housing (5) comprises at least three valve housing parts (51, 52, 53), which each have one port (7, 8, 9).

10. Flat slide valve (1) according to the preceding claim, **characterized in that** at least one seal (40) is arranged between at least two valve housing parts (51, 52, 53).

11. Flat slide valve (1) according to one of Claims 9 to 10, **characterized in that** the flat slide (10a, 10b) is arranged movably between two valve housing parts (51, 52, 53).

## Revendications

1. Soupape à tiroirs plats (1), en particulier soupape pour liquides, qui présente au moins deux tiroirs plats (10a, 10b) et au moins deux plaques de soupape (15a, 15b), un premier tiroir plat (10a) coopérant avec une première plaque de soupape (15a) et un deuxième tiroir plat (10b) coopérant avec une deuxième plaque de soupape (15b), un premier canal d'écoulement étant libéré ou bloqué en fonction de la position du premier tiroir plat (10a), et/ou un deuxième canal d'écoulement étant libéré ou bloqué en fonction de la position du deuxième tiroir plat (10b), et les tiroirs plats (10a, 10b) étant connectés l'un à l'autre par le biais d'un élément de liaison (30), **caractérisée en ce que** l'élément de liaison (30) est disposée essentiellement dans une région d'écoulement commune (35) des tiroirs plats (10a, 10b) de la soupape à tiroirs plats (1).

2. Soupape à tiroirs plats (1) selon la revendication précédente, **caractérisée en ce que** la soupape à tiroirs plats (1) présente au moins trois raccords (7, 8, 9), le premier canal d'écoulement reliant un premier raccord (7) et un deuxième raccord (8) et le deuxième canal d'écoulement reliant un deuxième raccord (8) et un troisième raccord (9).

3. Soupape à tiroirs plats (1) selon l'une quelconque des revendications précédentes, **caractérisée en ce que** la soupape à tiroirs plats (1) présente au moins un ressort (20), le ressort (20) pressant au moins un tiroir plat (10a, 10b) contre au moins une plaque de soupape (15a, 15b).

4. Soupape à tiroirs plats (1) selon la revendication 2 à 3, **caractérisée en ce qu'**au moins un ressort (20) est disposé sur le côté pression d'au moins un tiroir plat (1).

5. Soupape à tiroirs plats (1) selon l'une quelconque des revendications précédentes, **caractérisée en ce que** l'élément de liaison (30) agit à travers la plaque de soupape (15a, 15b) sur le tiroir plat (10a, 10b).

6. Soupape à tiroirs plats (1) selon l'une quelconque des revendications précédentes, **caractérisée en ce qu'**un actionneur (60), en particulier un corps de bobine ou un moteur électrique, agit sur l'élément de liaison (30), en particulier le déplace, de préférence le fait coulisser.

7. Soupape à tiroirs plats (1) selon l'une quelconque des revendications précédentes, **caractérisée en ce que** l'élément de liaison (30) comprend un élément d'accouplement (31) et un élément d'entraînement (32), l'élément d'entraînement (32) coopérant avec au moins un tiroir plat (10a, 10b), en particulier étant connecté à celui-ci, et l'élément d'accouplement (31) et l'élément d'entraînement (32) étant disposés essentiellement suivant un certain angle l'un par rapport à l'autre.

8. Soupape à tiroirs plats (1) selon l'une quelconque des revendications précédentes, **caractérisée en ce que** l'élément de liaison (30) est disposé sur le côté de sortie d'écoulement d'au moins un tiroir plat (10a, 10b).

9. Soupape à tiroirs plats (1) selon l'une quelconque des revendications précédentes, **caractérisée en ce que** la soupape à tiroirs plats (1) présente un boîtier de soupape (5), le boîtier de soupape (5) comprenant au moins trois parties de boîtier de soupape (51, 52, 53) qui présentent chacune un raccord (7, 8, 9).

10. Soupape à tiroirs plats (1) selon l'une quelconque des revendications précédentes, **caractérisée en ce qu'**au moins un joint d'étanchéité (40) est disposé entre au moins deux parties de boîtier de soupape (51, 52, 53).

11. Soupape à tiroirs plats (1) selon l'une quelconque des revendications 9 à 10, **caractérisée en ce que** le tiroir plat (10a, 10b) est disposé de manière déplaçable entre deux parties de boîtier de soupape (51, 52, 53).
